(19) Europäisches Patentamt / European Patent Office / Office européen des brevets

(11) **EP 4 242 070 A1**

(12) **EUROPEAN PATENT APPLICATION**
published in accordance with Art. 153(4) EPC

(43) Date of publication:
**13.09.2023 Bulletin 2023/37**

(21) Application number: **21889241.2**

(22) Date of filing: **04.11.2021**

(51) International Patent Classification (IPC):
**B60R 19/03** *(2006.01)*    **B60R 19/04** *(2006.01)*

(52) Cooperative Patent Classification (CPC):
**B60R 19/03; B60R 19/04**

(86) International application number:
**PCT/JP2021/040643**

(87) International publication number:
**WO 2022/097689 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2020 JP 2020185238**
**25.05.2021 JP 2021087599**

(71) Applicant: **Resonac Corporation**
**Tokyo 105-8518 (JP)**

(72) Inventors:
• **OTANI, Kazuo**
  **Tokyo 105-8518 (JP)**
• **NIIBAYASHI, Ryota**
  **Tokyo 105-8518 (JP)**
• **KAWATA, Naoyuki**
  **Tokyo 105-8518 (JP)**
• **TAKAHASHI, Nobuyuki**
  **Tokyo 105-8518 (JP)**
• **SATO, Masahiro**
  **Tokyo 105-8518 (JP)**

(74) Representative: **Strehl Schübel-Hopf & Partner**
**Maximilianstrasse 54**
**80538 München (DE)**

(54) **BUMPER REINFORCEMENT, METHOD FOR MANUFACTURING SAME, AND RESIN REINFORCEMENT MEMBER FOR BUMPER REINFORCEMENT**

(57)    Provided are: a lightweight bumper reinforcement which, with respect to the load during a collision, exhibits high rigidity against a light load and, against a heavy load, is capable of plastic deformation to absorb collision energy while effectively transferring unabsorbed energy to a crash box; a method for manufacturing the same; and a resin reinforcement member for a bumper reinforcement. The bumper reinforcement of the present disclosure comprises a body portion extending along a vehicle width direction, and a resin reinforcement portion extending along the vehicle width direction and disposed on the vehicle body side relative to the body portion. The body portion has at least one first joint portion on the vehicle body side. The resin reinforcement portion has at least one second joint portion joined to the first joint portion, and one or more reinforcement ribs projecting on the vehicle body side and extending along the vehicle width direction.

FIG. 1

EP 4 242 070 A1

## Description

FIELD

The present disclosure relates to a bumper reinforcement and a method of production of the same and also a resin reinforcement member for a bumper reinforcement.

BACKGROUND

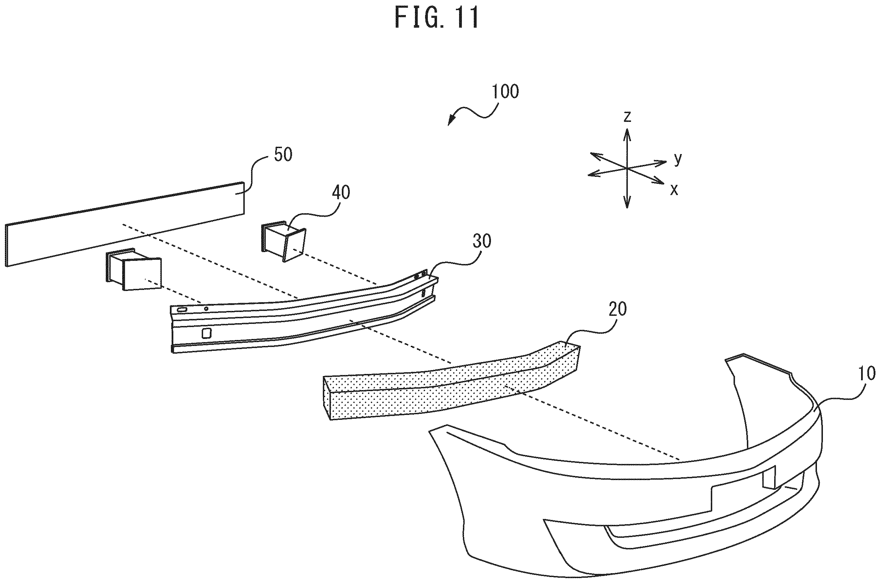

A front part and rear part of an automobile have bumper structures attached to them to absorb energy and protect the vehicle body and the passenger space at the time of a collision from the outside. A bumper structure, in general, as shown in FIG. 11, comprises, in order from the outside, a bumper fascia 10, energy absorber 20, bumper reinforcement 30, crush boxes 40, and a vehicle body fastening member 50.

PTL 1 (Japanese Unexamined Patent Publication No. 2020-019307) describes a bumper reinforcement provided with a metal body part having a pair of vertical walls arranged facing each other, a reinforcement member formed into a sheet shape using a fiber reinforced resin and arranged at one vertical wall at a surface at the opposite side to the other vertical wall, and an adhesive layer provided between the one vertical wall and reinforcement member to join the two and formed so that a thickness in the vehicle front-rear direction of a portion arranged at an outside in the planar direction from the end part of the reinforcement member at the outside in the planar direction becomes smaller the further toward the outside in the planar direction.

PTL 2 (Japanese Unexamined Patent Publication No. 2019-209767) describes a bumper or other vehicle use structure having a first member formed by a fiber reinforced resin including a woven fabric made by weaving a fiber and a matrix resin and having a groove-shaped cross-section opening toward a first direction and a second member formed by a metal member, arranged in a first direction with respect to the first member, and joined with the first member, the first member being arranged at the vehicle outer side with respect to the second member.

[CITATIONS LIST]

[PATENT LITERATURE]

[PTL 1] Japanese Unexamined Patent Publication No. 2020-019307
[PTL 2] Japanese Unexamined Patent Publication No. 2019-209767

SUMMARY

[TECHNICAL PROBLEM]

Reducing the weight at portions away from the center of gravity of an automobile such as a front part and rear part of an automobile not only has the effect of improvement of the fuel economy, but also can improve the running stability. For this reason, reducing the weight at such portions is being strongly demanded compared with other portions of a vehicle.

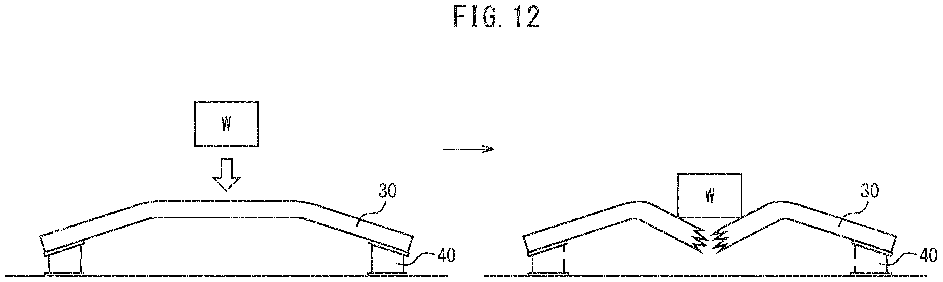

Bumper reinforcements arranged at the front part and rear part of an automobile are required to feature performance exhibiting a high rigidity with respect to a light load at the time of a collision and plastically deforming with respect to a heavy load to thereby absorb impact energy to a high degree. As shown in FIG. 12, when receiving a heavy load W, if a bumper reinforcement 30 does not plastically deform, but crumples or plastically deforms too much, the crush boxes 40 arranged at the vehicle body side will not be crushed, so the crush boxes 40 cannot be used to absorb the impact energy. As a result, the bumper structure cannot efficiently absorb the energy at the time of a collision from the outside, so the vehicle body and passenger space are liable to be unable to be sufficiently protected.

As shown in FIG. 11, the bumper reinforcement 30 is an elongated member extending along the vehicle width direction ($\pm$y direction of FIG. 11) and is generally formed using aluminum, iron or other such metal materials. A bumper reinforcement made of a metal is reduced in weight by making it a hollow structure. However, in a bumper reinforcement of a hollow structure having a cross-sectional shape for obtaining that performance, the reduction in weight was insufficient.

A bumper reinforcement formed using a resin material is reduced in weight compared with a bumper reinforcement formed using a metal material. However, a bumper reinforcement made of resin has difficulty in plastically deforming and is also insufficient in rigidity, so it was difficult to sufficiently obtain the above performance.

Even in the bumper reinforcements described in PTLs 1 and 2 formed using a metal material and resin material, it was difficult to sufficiently obtain the above performance.

Therefore, the technical problem of the present disclosure is to provide a light weight bumper reinforcement which exhibits a high rigidity with respect to a light load at the time of a collision and plastically deforms with respect to a heavy load to thereby absorb impact energy while effectively conveying energy unable to be absorbed to crush boxes and a method of production of same and also a resin reinforcement member for a bumper reinforcement.

[SOLUTION TO PROBLEM]

The present disclosure provides the following means for solving the above problem, but is not limited to these.

<Aspect 1>

A bumper reinforcement comprising

a body part extending along a vehicle width direction and
a resin reinforcement part extending along the vehicle width direction and arranged more at a vehicle body side than the body part
wherein,
the body part has at least one first joining part at the vehicle body side, and
the resin reinforcement part has
at least one second joining part to be joined with the first joining part and
one or more reinforcement ribs sticking out to the vehicle body side and extending along the vehicle width direction.

<Aspect 2>

The bumper reinforcement according to the aspect 1, wherein

the body part has an open cross-section and
the first joining part of the body part and the second joining part of the resin reinforcement part are joined so that a cavity part is formed inside of the body part.

<Aspect 3 >

The bumper reinforcement according to the aspect 1 or 2, wherein the cross-sectional shape of the body part is a hat type in form.

<Aspect 4>

The bumper reinforcement according to any one of the aspects 1 to 3, wherein

the body part has the first joining parts at the top and bottom, and
the reinforcement ribs are arranged corresponding to the first joining parts.

<Aspect 5>

The bumper reinforcement according to any one of the aspects 1 to 4, wherein the resin reinforcement part has one or more holes.

<Aspect 6>

The bumper reinforcement according to any one of the aspects 1 to 5, wherein the body part includes an aluminum alloy exhibiting a 350 MPa or more tensile strength.

<Aspect 7>

The bumper reinforcement according to any one of the aspects 1 to 6, wherein the resin reinforcement part includes a resin exhibiting a 5 GPa or more elasticity at 80°C.

<Aspect 8>

The bumper reinforcement according to any one of the aspects 1 to 7, wherein at least one type of agent selected from the group consisting of an adhesive and a primer is arranged between the first joining part and the second joining part.

<Aspect 9>

The bumper reinforcement according to any one of the aspects 1 to 8, wherein

the body part has the first joining parts respectively at the top and bottom,
the resin reinforcement part has
a resin body extending along the vehicle width direction and
the second joining parts respectively at the top and bottom of the resin body, and
the first joining parts and the second joining parts are joined at joining surfaces intersecting with a vehicle front-rear direction.

<Aspect 10>

The bumper reinforcement according to any one of the aspects 1 to 9, wherein the resin body has a second reinforcement rib extending in a vehicle top-bottom direction.

<Aspect 11>

A method of production of a bumper reinforcement comprising

a step of preparing a body part having at a vehicle body side at least one first joining part and extending along a vehicle width direction and
a step of making a second joining part of a resin reinforcement part having at least one second joining part and extending along the vehicle width direction join with the first joining part of the body part,
wherein,
the resin reinforcement part is arranged more at the vehicle body side than the body part and
the resin reinforcement part has one or more reinforcement ribs sticking out to the vehicle body side and extending along the vehicle width direction.

<Aspect 12>

The method of production according to the aspect 11, wherein the joining step comprises applying a primer layer to the first joining part of the body part, applying the second joining part of the resin reinforcement part to the primer layer, and then heating and melt bonding the primer layer and the second joining part.

<Aspect 13 >

A resin reinforcement member for a bumper reinforcement provided with a body part having at least one first joining part at a vehicle body side,

which the resin reinforcement member being arranged more at the vehicle body side than the body part and having at least one second joining part to be joined with the first joining part and
one or more reinforcement ribs sticking out to the vehicle body side and extending along a vehicle width direction.

<Aspect 14>

The resin reinforcement member according to the aspect 13,

which the resin reinforcement member comprises
a resin body extending along the vehicle width direction,
a pair of the second joining parts respectively provided at a top and bottom of the resin body, and
the one or more reinforcement ribs provided at the vehicle body side of the resin body, and

the second joining parts have joining surfaces intersecting with a vehicle front-rear direction.

[ADVANTAGEOUS EFFECTS OF INVENTION]

According to the present disclosure, it is possible to provide a light weight bumper reinforcement which exhibits a high rigidity with respect to a light load at the time of a collision and plastically deforms with respect to a heavy load to thereby absorb impact energy while effectively conveying energy unable to be absorbed to crush boxes and a method of production of same and also a resin reinforcement member for bumper reinforcement. Here, in the present disclosure, materials, members, and structures having such rigidity and plastic deformation will sometimes be referred to as having "suitable rigidity" and "suitable plastic deformation".

BRIEF DESCRIPTION OF DRAWINGS

FIG. 1 is a schematic perspective view of a bumper reinforcement of one embodiment.
FIG. 2 is a schematic perspective view of a body part of one embodiment.
FIG. 3 is a schematic perspective view of a resin reinforcement part of one embodiment.
FIG. 4 is a cross-sectional view along the line A-A of FIG. 1.
FIG. 5 is a cross-sectional view relating to the dimensions of a body part 200 and resin reinforcement part 300 of one embodiment.
FIG. 6 is a cross-sectional view of a bumper reinforcement of another embodiment.
FIG. 7 is a cross-sectional view relating to the dimensions of a body part 500 and resin reinforcement part 600 of another embodiment.
FIG. 8 is a schematic perspective view of a bumper reinforcement of still another embodiment.
FIG. 9 is a schematic perspective view of a surface at a body part of the resin reinforcement part 800 of still another embodiment.
FIG. 10 is a schematic view of an evaluation apparatus in a three-point bending test.
FIG. 11 is a schematic perspective view showing a bumper structure of a vehicle.
FIG. 12 is a schematic view of the time when applying a collision load to an easily bendable bumper reinforcement part arranged on a crush box.
FIG. 13 is a schematic view of the time when applying a collision load to a bumper reinforcement of one embodiment arranged on a crush box.

DESCRIPTION OF EMBODIMENTS

Below, while referring to the drawings, embodiments of the present disclosure will be explained in detail. The present disclosure is not limited to the following embodiments and can be worked modified in various ways within the scope of the gist of the invention.

In the present disclosure, the "front direction of the vehicle" and the "rear direction of the vehicle" mean the x-direction and -x-direction of FIG. 11, the "top direction of the vehicle" and the "bottom direction of the vehicle" mean the z-direction and -z-direction of FIG. 11, and the "width direction of the vehicle" means the $\pm y$ direction of FIG. 11. In the present disclosure, the "vehicle" means the automobile as a whole, while the "vehicle body" means the part positioned at the inside of the vehicle from the bumper structures and carrying passengers or a load. In the following explanation, unless particularly noted, for example, when using the "top-bottom direction", "front-rear direction", and "width direction", these respectively mean the top-bottom direction of the vehicle, the front-rear direction of the vehicle, and the width direction of the vehicle.

< <Bumper Reinforcement>>

An automobile is provided with bumper structures at a front part and rear part of the vehicle. As shown in FIG. 11, a bumper structure 100 typically has, in order from the front part or rear part of the vehicle, a bumper fascia 10, energy absorber 20, bumper reinforcement 30, crush boxes 40, and a vehicle body fastening member 50. These members differ in degrees of rigidity. All have performances in absorbing energy at the time of a collision from the outside. To efficiently absorb impact energy, it is ideal that a bumper structure be configured so that when it receives impact energy from the outside, it plastically deforms or is broken in the order of the members positioned at the outside of the vehicle.

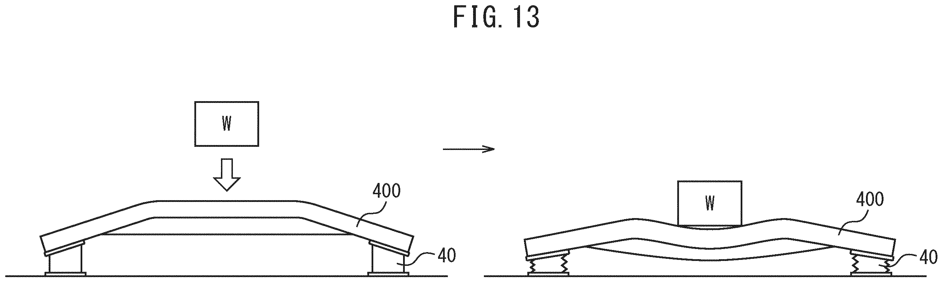

For example, as shown in FIG. 12, if a bumper reinforcement 30 which was reduced in weight and therefore easily crumples or excessively plastically deforms is arranged at a bumper structure, when receiving a heavy load W, the crush boxes 40 will be less likely to be crushed, so the impact energy will not be able to be efficiently absorbed. On the other hand, in the bumper reinforcement 400 of the present disclosure, a resin reinforcement part having one or more reinforcement ribs sticking out to the vehicle body side and extending along the vehicle width direction is joined with the body part forming part of the bumper reinforcement 400 so as to be arranged more at the vehicle body side from the body part. As a result, as shown in FIG. 13, when the bumper reinforcement 400 of the present disclosure receives a heavy load W, it will not crumple or otherwise be impaired, but will plastically deform while conveying the impact energy to the crush boxes 40 to be able to make the crush boxes 40 deform, so a bumper structure provided with the bumper reinforcement 400 will be able to efficiently absorb impact energy.

The mass per unit length (g/m) of the bumper reinforcement can be made less than 2700 g/m, 2650 g/m or less, or 2600 g/m or less. The lower limit value of the mass per unit length is not particularly prescribed, but, for example, can be made 2000 g/m or more, 2200 g/m or more, 2400 g/m or more, or 2500 g/m or more. The mass per unit length is an indicator of reduced weight of the bumper reinforcement. When a bumper reinforcement is, for example, curved, the unit length of the bumper reinforcement means the length along the direction of extension of the bumper reinforcement.

The amount of residual strain of the bumper reinforcement can be made less than 0.50%, 0.45% or less, or 0.40% or less and can be made 0.20% or more, 0.25% or more, or 0.30% or more under conditions of a temperature of 25°C, load of 5t, and displacement speed of 1 mm/min. The amount of residual strain is an indicator of whether the bumper reinforcement exhibits a suitable rigidity and plastic deformation.

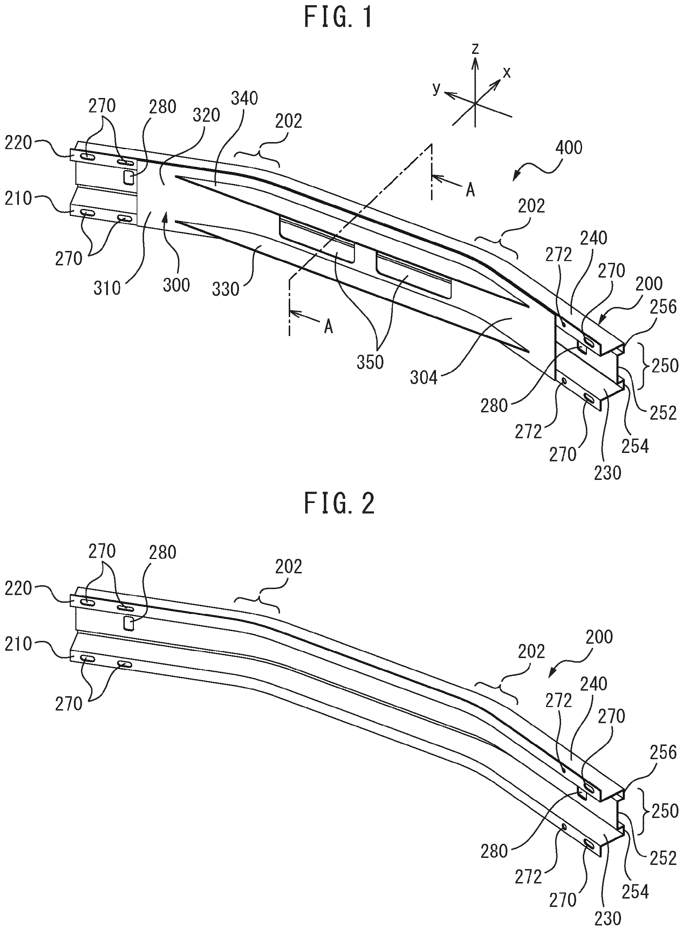

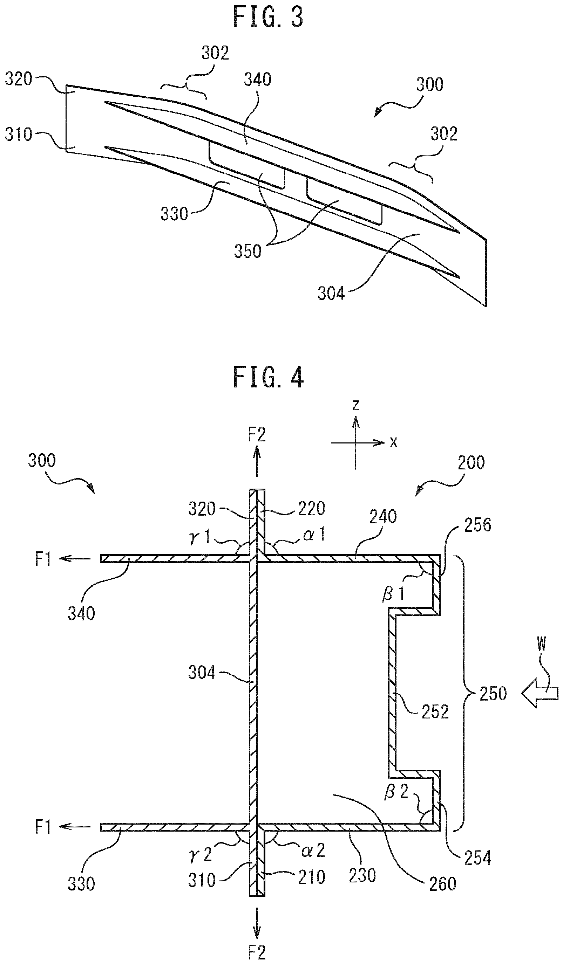

FIG. 1 is a schematic perspective view of a bumper reinforcement of one embodiment. FIG. 4 is a cross-sectional view along the line A-A of FIG. 1. The bumper reinforcement 400 has a body part 200 extending along a vehicle width direction and a resin reinforcement part 300 extending along the vehicle width direction and arranged more to the vehicle body side than the body part 200. Below, the body part 200 and resin reinforcement part 300 forming the bumper reinforcement will be explained in that order. The bumper reinforcement explained here, to facilitate understanding, alludes to the bumper reinforcement set at the bumper structure at the vehicle front part (front bumper), but the bumper reinforcement of the present disclosure can also be set at the bumper structure at the vehicle rear part (rear bumper). If employing the bumper reinforcement of the present disclosure for the rear bumper, in the following explanation, the "front surface part" can be read as the "rear surface part".

The length of the resin reinforcement part 300 in the vehicle width direction can be made 50% or more of the length of the body part 200 in the vehicle width direction, 55% or more, 60% or more, 65% or more, 70% or more, 75% or more, or 85% or more, 100% or less, 95% or less, 90% or less, 85% or less, 80% or less, or 75% or less.

<Body Part>

FIG. 2 shows a body part of one embodiment. The body part 200 extends in the vehicle width direction and has a lower first joining part 210 and an upper first joining part 220 at the vehicle body side. The body part 200 is gently bent at a bent part 202 by bending, etc., corresponding to the design of the bumper. Due to this, the two left and right end parts of the body part 200 are positioned further to the rear side in the front-rear direction of the vehicle than the center part of the body part 200. In the case of a rear bumper, the two left and right end parts of the body part 200 are positioned further to the front side in the front-rear direction of the vehicle than the center part of the body part 200.

The two left and right end parts of the lower first joining part 210 and the upper first joining part 220 are provided with elongated holes 270 and positioning holes 272 for attaching the bumper reinforcement 400 to the crush boxes 40 by bolts and nuts, screws, or other fasteners. The body part may also be formed with, in addition to these holes, for example, holes designed to reduce weight, relief holes for relieving deformation stress occurring due to bending operations, and holes for insertion of a wrench for fastening bolts.

The body part 200 has a bottom part 230, front surface part 250, and top part 240 connecting the lower first joining part 210 and the upper first joining part 220. The front surface part 250 has a center recessed part 252, bottom surface 254, and top surface 256 extending along the width direction of the vehicle. By providing the center recessed part 252, it is possible to reduce the weight of the body part 200 while raising the rigidity of the body part 200.

The two left and right end parts of the front surface part 250 have urethane foam members, polypropylene foam members, or other energy absorbers 20 attached to them or have opening parts 280 for positioning provided at them.

The body part 200 has a hollow structure from the viewpoint of reduced weight. Specifically, it has an open cross-section. The cross-sectional shape of the body part 200, as shown in FIG. 2 and FIG. 4, has a shape where the lower first joining part 210 and the upper first joining part 220 respectively extend in the bottom direction and top direction from the bottom part 230 and the top part 240 and the opposite side of the front surface part 250 is open, that is, a so-called "hat shape". The body part 200 shown in FIG. 4 has a center recessed part 252, so when rotated to the right by 90 degrees, has a cross-sectional shape of a shape of a W-hat shape, so can also be called a "W-hat shaped body part".

The dimensions, thickness, and shape of the body part 200 can be suitably set in accordance with the vehicle to which the bumper reinforcement is attached (for example, a passenger car, truck, etc.) and the required performance (for example, reduced weight and suitable rigidity and plastic deformation).

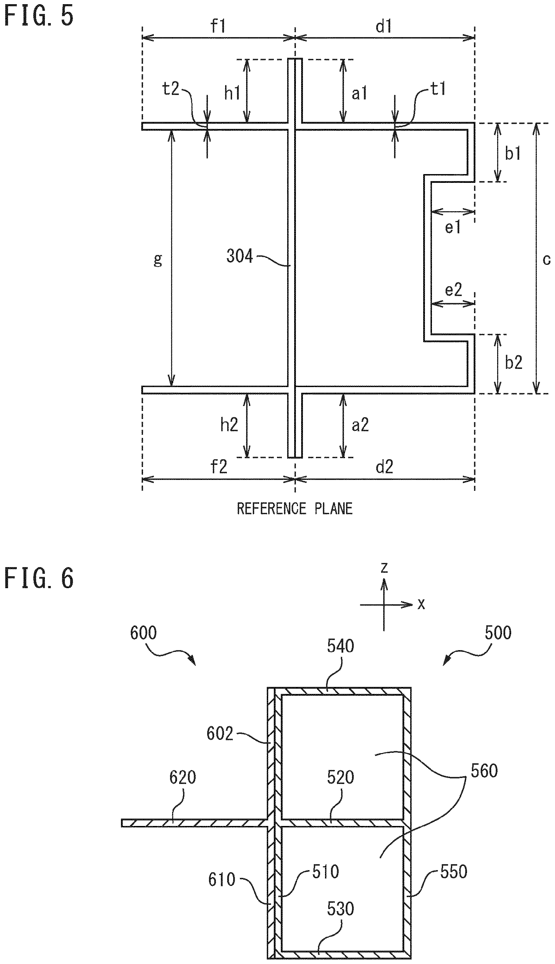

FIG. 5 is a cross-sectional view relating to the dimensions of the body part 200 and resin reinforcement part 300. The following explanation using FIG. 5 is not limited to embodiments where the cross-sectional shape of the body part is the one shown in FIG. 5.

A width a1 of the upper first joining part 220 and a width a2 of the lower first joining part 210 can respectively independently be made 10 mm or more, 15 mm or more, 20 mm or more, or 25 mm or more and can be made 50 mm or less, 45 mm or less, 40 mm or less, or 35 mm or less. The widths of the first joining parts can be suitably set in accordance with the joining strength, etc., required with the second joining parts of the resin reinforcement part joined with them.

A depth d1 of the top part 240 and a depth d2 of the bottom part 230 can respectively independently be made 20 mm or more, 30 mm or more, 40 mm or more, or 50 mm or more and can be made 100 mm or less, 90 mm or less, 80 mm or less, or 70 mm or less. The depths d1 and d2 of the top part 240 and the bottom part 230 can be suitably set in accordance with the required rigidity and plastic deformation.

A height "c" of the front surface part 250 can be made 50 mm or more, 60 mm or more, 80 mm or more, or 100 mm or more and can be made 200 mm or less, 180 mm or less, 160 mm or less, or 150 mm or less. The height "c" of the front surface part 250 can be suitably set in accordance with the required rigidity and plastic deformation.

If the body part 200 is a W-hat shaped body part, a height b1 of the top surface 256 and a height b2 of the bottom surface 254 can respectively independently be made 5 mm or more, 10 mm or more, 13 mm or more, or 15 mm or more and can be made 40 mm or less, 35 mm or less, 30 mm or less, or 25 mm or less. A depth e1 from the top surface 256 to the center recessed part 252 and a depth e2 from the bottom surface 254 to the center recess part 252 can respectively independently be made 5 mm or more, 8 mm or more, 10 mm or more, or 13 mm or more and can be made 35 mm or less, 30 mm or less, 25 mm or less, or 20 mm or less. b1, b2, e1, and e2 can be suitably set in accordance with the required rigidity and plastic deformation.

A thickness t1 of the body part 200 can be made 1.0 mm or more, 1.5 mm or more, or 2.0 mm or more and can be made 5.0 mm or less, 4.5 mm or less, or 4.0 mm or less. The thicknesses of the different portions making up the body part (for example, the first joining parts) can be suitably set in accordance with the reduced weight and suitable rigidity and plastic deformation and other demanded performance. The thickness of the body part 200 may be the same thickness at the different portions or may differ for each portion.

An angle $\alpha1$ formed by the top part 240 and the upper first joining part 220 at the body part 200 shown in FIG. 4 can be made 75 degrees or more, 80 degrees or more, or 85 degrees or more and can be made 105 degrees or less, 100 degrees or less, or 95 degrees or less. As the angle $\alpha1$, 90 degrees is preferable. This angle can be similarly applied to the angle $\alpha2$ formed by the bottom part 230 and the lower first joining part 210.

An angle $\beta1$ formed by the top surface 256 and the top part 240 of the front surface part 250 can be made 75 degrees or more, 80 degrees or more, or 85 degrees or more and can be made 105 degrees or less, 100 degrees or less, or 95 degrees or less. As the angle $\beta1$, 90 degrees is preferable. This angle can be similarly applied to the angle $\beta2$ formed by the bottom surface 254 and the bottom part 230 of the front surface part 250.

As the material of the body part 200, for example, a metal material, metal alloy material, and fiber reinforced resin material can be mentioned. Among these as well, a metal material and metal alloy material are preferable, aluminum and an aluminum alloy are more preferable, and an aluminum alloy is particularly preferable. These materials can be used alone or in combinations of two or more types.

As an aluminum alloy, from the viewpoints of reduced weight and suitable rigidity and plastic deformation, etc., an aluminum alloy exhibiting a tensile strength of 350 MPa or more, 400 MPa or more, or 450 MPa or more is preferable. The upper limit value of the tensile strength of the alloy is not particularly prescribed, but, for example, may be made 600 MPa or less, 550 MPa or less, or 500 MPa or less. Here, the tensile strength is the value measured using a universal test apparatus based on JIS Z 2241 (AG-100KNX, made by Shimadzu Corporation).

As such an aluminum alloy, for example, an alloy having an aluminum content of 50 mass% or more, specifically an A7000 series alloy (for example, A7003, A7075, and A7N01), A6000 series alloy (for example, A6061, A6082, and A6110), A5000 series alloy, and A3000 series alloy can be mentioned.

The body part is an extruded shape material, die cast material, cast material, forged material, etc., formed using a metal material or metal alloy material. Among these as well, from the viewpoint of the productivity, etc., an extruded shape material is preferable.

The extruded shape material of the body part can, for example, be produced in the following way. A step of supplying a melt of a metal material or metal alloy material having predetermined properties to a continuous casting apparatus so as to continuously cast bars, a step of homogenizing the cast bars, a step of cutting the cast bars into predetermined lengths to obtain billets as extrusion materials, a step of outer diameter facing the billets, and a step of hot extruding the billets, then immediately water cooling and tempering them to form extruded shape materials with a predetermined cross-section are performed in the order described. Next, the extruded shape materials are cut into predetermined lengths, the two cut end faces are face cut, deburred, or otherwise subject to predetermined processing and then bent to form bent parts to thereby form the extruded shape materials. Before cutting or after cutting the extruded shape materials or before bending or after bending the extruded shape materials, the extruded shape materials can be subjected to artificial aging or another heat treatment step. For example, if using an A6000 series alloy and/or A7000 series alloy to form the extruded shape materials, performing such a heat treatment step is preferable.

<Resin Reinforcement Part >

FIG. 3 shows a resin reinforcement part of one embodiment. The resin reinforcement part 300 has at least one second joining part extending along the vehicle width direction. In the case of the present figure, the resin reinforcement part 300 has a lower second joining part 310 and the upper second joining part 320 as second joining parts. If having two second joining parts, that is, the lower second joining part 310 and the upper second joining part 320, the resin reinforcement part 300 is preferably provided with a resin body 304.

The resin body 304 is a plate shape having the vehicle width direction as its long direction, the vehicle top-bottom direction as its short direction, and the vehicle front-rear direction as its thickness direction and has a bent part 302 at a position corresponding to the bent part 202 of the body part 200. The resin body 304 respectively has the lower second joining part 310 and the upper second joining part 320 integrally at the bottom and top of the body part side surface.

The lower second joining part 310 is a belt-shaped region arranged at the bottom side of the resin body 304, extending from one end to the other end of the vehicle width direction, and having a predetermined width. The upper second joining part 320 is a belt-shaped region arranged at the top side of the resin body 304, extending from one end to the other end of the vehicle width direction, and having a predetermined width. The widths of the lower second joining part 310 and the upper second joining part 320 are selected matching the length of the first joining part in the vehicle top-bottom direction. In this way, the lower second joining part 310 and the upper second joining part 320 extend over the entire region of the resin body 304 in the long direction. The lower second joining part 310 and the upper second joining part 320 are made integral through the resin body 304. The lower second joining part 310 and the upper second joining part 320 are joined at the surface at the body part side in a state respectively contacting the lower first joining part 210 and the upper first joining part 220.

As shown in FIG. 1 and FIG. 4, the resin reinforcement part 300 has the lower second joining part 310 and the upper second joining part 320 respectively joined with the lower first joining part 210 and the upper first joining part 220 of the body part 200. The lower second joining part 310 and the upper second joining part 320 and the lower first joining part 210 and the upper first joining part 220 are joined at joining surfaces intersecting with the front-back direction of the vehicle. The body part 200 has an open cross-section. The lower first joining part 210 and the upper first joining part 220 of the body part 200 and the lower second joining part 310 and the upper second joining part 320 of the resin reinforcement part 300 are respectively joined so that a cavity part 260 is formed inside the body part 200.

The resin reinforcement part 300 has a lower reinforcement rib 330 and the upper reinforcement rib 340 sticking out to the vehicle body side and extending along the vehicle width direction. As shown in FIG. 4, the lower reinforcement rib 330 and the upper reinforcement rib 340 are respectively arranged corresponding to the lower first joining part 210 and the upper first joining part 220 of the body part 200. Due to this, it is possible to use a lighter resin reinforcement part 300 to impart a suitable rigidity and plastic deformation to the bumper reinforcement.

Here, "arranged corresponding to a first joining part" means mainly the one reinforcement rib being noted being arranged at a position enabling identification of through which first joining part an effect advantageous to rigidity and plastic deformation of the bumper reinforcement is given. The positional relationship of the reinforcement ribs at the resin reinforcement part will be explained, for example, referring to the upper first joining part 220 and upper reinforcement rib 340 of FIG. 4. From the viewpoint of suitable rigidity and plastic deformation, the position of the upper reinforcement rib 340 in the z-direction is preferably, from inside the range of the upper first joining part 220, within 10 mm, within 5 mm, or within 3 mm in range from the upper first joining part 220 in the region of the cavity part 260 below the upper first joining part 220. The more preferable position of the upper reinforcement rib 340 in the z-direction is within 10 mm, within 5 mm, or within 3 mm in range above from the position of the top part 240 in the z-direction. As shown in FIG. 4, particularly preferably the reinforcement rib is arranged so as to match the position of the top part 240 in the z-direction. This positional relationship can be similarly applied to the bottom part reinforcement rib 330 as well.

The resin reinforcement part need only have one or more reinforcement ribs. If there are a plurality of first joining parts, having a plurality of reinforcement ribs arranged corresponding to the first joining parts is preferable. A plurality of reinforcement ribs may also be arranged corresponding to a single first joining part. If arranging a plurality of reinforcement ribs with respect to a single first joining part, from the viewpoint of receiving impact with a good balance, arranging the reinforcement ribs symmetrically is preferable. The upper limit of the number of reinforcement ribs arranged is not particularly prescribed and can be made six or less or four or less, but from the viewpoint of reduced weight, two or less reinforcement ribs are preferable.

The resin reinforcement part may also have one or more additional reinforcement ribs extending in the top-bottom direction. The upper limit of the number of the additional reinforcement ribs (second reinforcement ribs) arranged is not particularly prescribed and can be made six or less or four or less. If considering reduced weight, there are preferably two or less additional reinforcement ribs. No provision of the same is more preferable.

The dimensions, thickness, and shape of the resin reinforcement part 300 can be suitably set in accordance with the vehicle to which the bumper reinforcement is attached (for example, a passenger car, truck, etc.) and the required performance (for example, reduced weight and suitable rigidity and plastic deformation).

The width h1 of the upper second joining part 320 and the width h2 of the lower second joining part 310 can respectively independently be made 10 mm or more, 15 mm or more, 20 mm or more, or 25 mm or more and can be made 50 mm or less, 45 mm or less, 40 mm or less, or 35 mm or less. The widths of the second joining parts can be suitably set in accordance with the joining strength required with the first joining parts of the body part to be joined with.

The amount of projection f1 of the upper reinforcement rib 340 and the amount of projection f2 of the lower reinforcement rib 330 can respectively independently be made 30 mm or more, 35 mm or more, 40 mm or more, or 45 mm or more and can be made 100 mm or less, 90 mm or less, 80 mm or less, 70 mm or less, or 60 mm or less. The amounts of projection of the reinforcement ribs can be suitably set in accordance with the required rigidity and plastic deformation. In FIG. 3, the resin reinforcement part 300 is bent at the bent part 302, so the lower reinforcement rib 330 and the upper reinforcement rib 340 gradually decrease in amounts of projection from the bent part 302 at the outsides. The amounts of projection f1 and 2 in this case mean the maximum amounts of projection. The amounts of projection of the reinforcement ribs may change in the vehicle width direction or may not change. As shown in FIG. 3, the line connecting the vehicle body side front ends of the reinforcement ribs 330, 340 is preferably parallel with the vehicle width direction.

The distance "g" between the upper reinforcement rib 340 and lower reinforcement rib 330 can be made 50 mm or more, 60 mm or more, 80 mm or more, or 100 mm or more and can be made 200 mm or less, 180 mm or less, 160 mm or less, or 150 mm or less. The distance between the reinforcement ribs in the case where there are two or more reinforcement ribs can be suitably set in accordance with the required rigidity and plastic deformation.

The lengths of the reinforcement ribs in the vehicle width direction can be made 50% or more of the length of the body part in the vehicle width direction, 55% or more, 60% or more, 65% or more, 70% or more, 75% or more, or 85% or more, 100% or less, 90% or less, 85% or less, 80% or less, or 75% or less.

The thickness t2 of the resin reinforcement part can be made 1.0 mm or more, 1.5 mm or more, or 2.0 mm or more and can be made 5.0 mm or less, 4.5 mm or less, or 4.0 mm or less. The thicknesses of the portions forming the resin reinforcement part (for example, the reinforcement ribs and second joining parts) can be suitably set in accordance with the reduced weight, suitable rigidity and plastic deformation, and other required performance. The thickness of the resin reinforcement part 300 may be the same thickness at the different portions or may differ for each portion.

The angle $\gamma1$ formed by the upper second joining part 320 and the upper reinforcement rib 340 at the resin reinforcement part 300 shown in FIG. 4 can be made 75 degrees or more, 80 degrees or more, or 85 degrees or more and can be made 105 degrees or less, 100 degrees or less, or 95 degrees or less. As the angle $\gamma1$, 90 degrees is preferable. This angle can also be applied to the angle $\gamma2$ formed by the lower second joining part 310 and the lower reinforcement rib 330.

The resin reinforcement part 300 shown in FIG. 3 has two weight reducing holes 350 near the center. By providing the weight reducing holes, the resin reinforcement part can be reduced in weight more. There may be one or more weight reducing holes. The number, sizes, and shapes of the weight reducing holes can be suitably set in accordance with the required performance (for example, reduced weight and suitable rigidity and plastic deformation).

The material of the resin reinforcement part is not particularly limited so long as it is a resin material. As the material of the resin reinforcement part, for example, a thermoplastic resin and a thermosetting resin can be mentioned. Specifically, a nylon resin, polybutylene terephthalate resin (PBT resin), polycarbonate resin, polyolefin resin, polyester resin (for example, unsaturated polyester resin), urethane resin, epoxy resin, modified polyphenylene ether resin, polyether imide resin, and vinyl ester resin can be mentioned. These materials can be used alone or in combinations of two or more types.

The material of the resin reinforcement part may also be a resin comprised of the above resin material to which a reinforcing fiber (for example, carbon fiber, glass fiber, or cellulose nanofiber) is mixed. As such a material, for example, carbon fiber reinforced resin (CFRP) and glass fiber reinforced resin (GFRP) can be mentioned.

As the material of the resin reinforcement part, among these materials as well, from the viewpoints of reduced weight and suitable rigidity and plastic deformation, it is preferable to use a resin exhibiting a 5 GPa or more, 7 GPa or more, or 10 GPa or more elasticity at 80°C. The upper limit value of the elasticity is not particularly prescribed, but, for example, can be made 70 GPa or less, 60 GPa or less, or 50 GPa or less. Here, the elasticity is the value measured using the universal test apparatus based on JIS K 7161 (AG-100KNX, made by Shimadzu Corporation).

The resin reinforcement part can be formed by a known molding method, for example, injection molding (including insert molding), transfer molding, press forming, filament winding, hand layup, etc.

The method of joining the second joining parts of the resin reinforcement part and the first joining parts of the body part is not particularly limited so long as having a strength where the interface does not break by impact at the time of a collision. For example, a mechanical joining method using nuts and bolts, screws, etc., or a chemical joining method using at least one type of substance selected from the group consisting of an adhesive and a primer can be employed.

The adhesive and primer can be suitably selected in accordance with the types of the body part and resin

9

reinforcement part. For example, an acrylic resin, epoxy resin, urethane resin, vinyl ester resin, or other known adhesive and also a primer can be used. In the present disclosure, a "primer" means a material having joinability applied before joining in advance to the body part or resin reinforcement part or both of the same.

The adhesive may be a hot melt adhesive. As the hot melt adhesive, for example, an EVA based one, tacky rubber based one (elastomer based one), olefin based one, and polyester-polyamide based one may be mentioned. As the hot melt adhesive, one giving a strong joining strength corresponding to the material and surface conditions of the bumper reinforcement used is preferable.

As the joining method, a method which joins the first joining parts and the second joining parts simultaneously with forming the resin reinforcement part by injection molding may be employed. If injection molding, it is possible to form fine asperities in advance on the surfaces of the first joining parts to roughen them and thereby obtain an anchor effect for obtaining joining strength between the surfaces of the first joining parts and the second joining parts.

As the joining method, the method using heat crimping may be employed. In the case of heat crimping, through holes are formed in advance at the first joining parts, projections are formed at positions corresponding to the through holes at the second joining parts, the projections are inserted into the through holes, and the front ends of the projections are heat crimped in that state.

The above joining methods can be used alone or in combination.

The thickness of a joining layer if joining a second joining part of the resin reinforcement part and a first joining part of the body part by the chemical joining method is not particularly limited and can be suitably selected considering the required performance (for example, the joining strength or impact absorption). The thickness of the joining layer can be made, for example, 3 $\mu$m or more, 4 $\mu$m or more, or 5 $\mu$m or more and can be made 10 mm or less, 5 mm or less, or 1 mm or less.

< <Method of Production of Bumper Reinforcement> >

The method of production of the bumper reinforcement is not particularly limited. For example, this method of production includes a step of preparing the body part explained above and the step of joining a second joining part of the resin reinforcement part with a first joining part of the body part.

The body part can, for example, be prepared using the extrusion method, die cast method, casting method, forging method, or other known shaping method. The resin reinforcement part, as explained above, can be prepared using injection molding (including the insert molding), transfer molding, press method, filament winding, hand layup, etc.

As the method of joining a second joining part of the resin reinforcement part and a first joining part of the body part, as explained above, it is possible to employ a mechanical joining method or chemical joining method. These joining methods can be used alone or in combination.

< <Action and Effect> >

As shown in FIG. 4, the action and effect will be explained with reference to an example of a case where the bumper reinforcement receives a heavy load W in the vehicle front-rear direction. First, force due to the heavy load W is applied to the front surface part 250 of the body part 200. The force is conveyed from the front surface part 250 through the bottom part 230 and the top part 240 to the lower first joining part 210 and the upper first joining part 220. The body part 200 is a hat shape, so the above force is dispersed to the force F1 in the vehicle front-rear direction to the resin reinforcement part 300 and the force F2 in the direction along the joining surfaces to the lower first joining part 210 and the upper first joining part 220, in the case of FIG. 4, to the force F2 in the outward direction in the vehicle top-bottom direction and are conveyed to the same.

The lower second joining part 310 and upper second joining part 320 and the lower first joining part 210 and upper first joining part 220 are joined at joining surfaces intersecting with the front-rear direction of the vehicle. That is, the joining surfaces are conveyed the force F2. The force F2 is smaller than the heavy load W by exactly the amount of dispersion of the force F1 in the force due to the heavy load W. Therefore, the lower second joining part 310 and upper second joining part 320 and the lower first joining part 210 and upper first joining part 220 can improve joining strength much more compared with provision of joining surfaces in parallel to the vehicle front-rear direction.

The lower first joining part 210 and the upper first joining part 220 are respectively joined with the lower second joining part 310 and the upper second joining part 320. Further, the lower second joining part 310 and the upper second joining part 320 are integrally formed with the resin body 304. Therefore, the resin reinforcement part 300 exhibits a stress countering the above force F2. That is, the resin body 304 exhibits a stress countering the above force F2. Due to this, the resin reinforcement part 300 keeps the lower first joining part 210 and the upper first joining part 220 of the body part 200 from deforming outward in the vehicle top-bottom direction.

Further, the heavy load W generates a force bending the bumper reinforcement 400 in the vehicle width direction. The lower second joining part 310 and the upper second joining part 320 of the resin reinforcement part 300 are joined with the lower first joining part 210 and the upper first joining part 220 of the body part 200 respectively across the entire region of the vehicle width direction. Due to this, the resin reinforcement part 300 maintains a state joined with the body part 200 and thereby exhibits stress countering the force bending the lower reinforcement rib 330 and the upper reinforcement rib 340 in the vehicle width direction. Due to this, the resin reinforcement part 300 keeps the body part 200 from bending in the vehicle width direction.

Therefore, the bumper reinforcement 400 can absorb the force generated by the heavy load W by the body part 200 and resin reinforcement part 300 plastically deforming while effectively conveying the impact energy unable to be completely absorbed to the crush boxes. As a result, the vehicle provided with the bumper reinforcement 400 can effectively convey the impact energy due to the heavy load W to the crush boxes 40 and efficiently absorb the impact energy to thereby keep the vehicle body from being damaged.

<Modification 1: Modification 1 of Bumper Reinforcement>

FIG. 6 shows the cross-sectional view of a bumper reinforcement of another embodiment. The bumper reinforcement has a body part 500 and a resin reinforcement part 600. For the materials and thicknesses of the body part 500 and resin reinforcement part 600, the angle of a reinforcement rib 620 at the resin reinforcement part 600, etc., employed, ones similar to those described in the above-mentioned body part 200 and resin reinforcement part 300 can be employed.

The body part 500 is closed at the opposite side of the front surface part 550. The closed part forms part of the first joining part 510. That is, the body part 500 has a closed cross-section. Such a body part will sometimes be called a "closed type body part" in the present disclosure. The resin reinforcement part 600 has a resin body 602 and a second joining part 610 extending along the vehicle width direction. The resin body 602 is a plate shape having the vehicle width direction as its long direction, the vehicle top-bottom direction as its short direction, and the vehicle front-rear direction as its thickness direction. The resin body 602 is integral with the second joining part 610. The second joining part 610 is joined in a state in contact with the first joining part 510 at the surface as a whole of the resin body 602 at the body part side. The second joining part 610 of the resin reinforcement part 600 is joined with the first joining part 510. A single reinforcement rib 620 is formed at a position corresponding to the center part 520 of the body part 500 and sticks out to the vehicle body side.

(Closed Type Body Part)

The closed type body part 500 is formed with cavity parts 560 at two locations across the center part 520. The number of the cavity parts of the closed type body part is not particularly limited and can be suitably selected considering the reduced weight and the suitable rigidity and plastic deformation, but formation at two or more locations is preferable. For example, if three cavity parts are formed, there are two center parts 520 present.

In FIG. 6, the outer circumferential cross-sectional shape of the body part 500 is a rectangle. The outer circumferential cross-sectional shape of the closed type body part is not particularly limited and may also be an angular shape, square shape, trapezoidal shape, semicircular shape, or other shape.

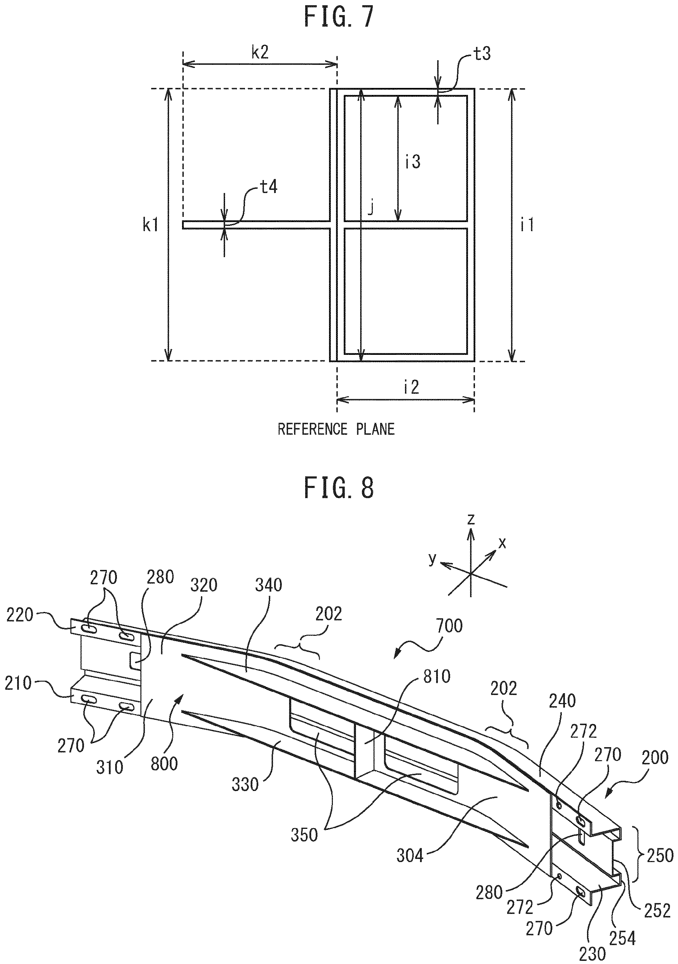

FIG. 7 shows a cross-sectional view relating to the dimensions of the body part 500 and resin reinforcement part 600. The following explanation using FIG. 7 is not limited to an embodiment in which the cross-sectional shape of the body part is the one shown in FIG. 7.

A height i1 of the front surface part 550 and a width "j" of the first joining part 510 can respectively independently be made 50 mm or more, 60 mm or more, 80 mm or more, or 100 mm or more and can be made 200 mm or less, 180 mm or less, 160 mm or less, or 150 mm or less. The height i1 of the front surface part 550 and the width "j" of the first joining part 510 can be suitably set in accordance with the required performance (joining strength, rigidity, and plastic deformation).

A depth i2 of the body part 500 can be made 20 mm or more, 30 mm or more, 40 mm or more, or 50 mm or more and can be made 100 mm or less, 90 mm or less, 80 mm or less, or 70 mm or less. The depth i2 of the body part 500 can be suitably set in accordance with the required rigidity and plastic deformation.

A height i3 of the cavity 560 can be made 20 mm or more, 30 mm or more, 40 mm or more, or 50 mm or more and can be made 100 mm or less, 90 mm or less, 80 mm or less, or 70 mm or less. The height i3 of the cavity 560 can be suitably set in accordance with the required rigidity and plastic deformation.

The thickness t3 of the body part 500 can be made a range similar to the thickness t1 of the body part 200.

(Resin Reinforcement Part)

In FIG. 6, a single reinforcement rib 620 is arranged corresponding to the center part 520 of the body part 500. The reinforcement rib 620 is preferably arranged corresponding to any portion of the bottom part 530, center part 520, and the top part 540 of the body part 500. From the viewpoint of the suitable plastic deformation and receiving impact with a good balance, when providing a single reinforcement rib 620, the reinforcement rib 620 is preferably arranged corresponding to the position of the center part 520. When providing two or more reinforcement ribs 620, the reinforcement ribs 620 are preferably arranged symmetrically. The reinforcement rib 620 is more preferably arranged matching any portion of the bottom part 530, center part 520, and top part 540.

The width of the second joining part k1 of the resin reinforcement part 600 (corresponding to height of resin reinforcement part) is a range similar to the width "j" of the first joining part 510 and may be different from the width "j" of the first joining part 510. The thickness t4 of the resin reinforcement part 600 can be made a range similar to the thickness t2 of the resin reinforcement part 300. The amount of projection k2 of the reinforcement rib 620 of the resin reinforcement part 600 can be made a similar range as the amounts of projection f1 and f2 of the lower reinforcement rib 330 and the upper reinforcement rib 340 of the resin reinforcement part 300.

<Modification 2: Modification 2 of Bumper Reinforcement>

FIG. 8 shows a schematic perspective view of a bumper reinforcement 700 of still another embodiment. Parts of the configuration similar to the above embodiment will be assigned similar signs and explanations thereof will be omitted. The bumper reinforcement 700 has a body part 200 extending along the vehicle width direction and a resin reinforcement part 800 extending along the vehicle width direction and arranged closer to the vehicle body side than the body part 200.

The resin reinforcement part 800 has a resin body 304, lower second joining part 310, and upper second joining part 320. The resin body 304 is a plate shape having the vehicle width direction as its long direction, the vehicle top-bottom direction as its short direction, and the vehicle front-rear direction as its thickness direction and has a bent part 302 at a position corresponding to the bent part 202 of the body part 200. The resin body 304 respectively has a lower second joining part 310 and the upper second joining part 320 integrally above and below the body part side surface.

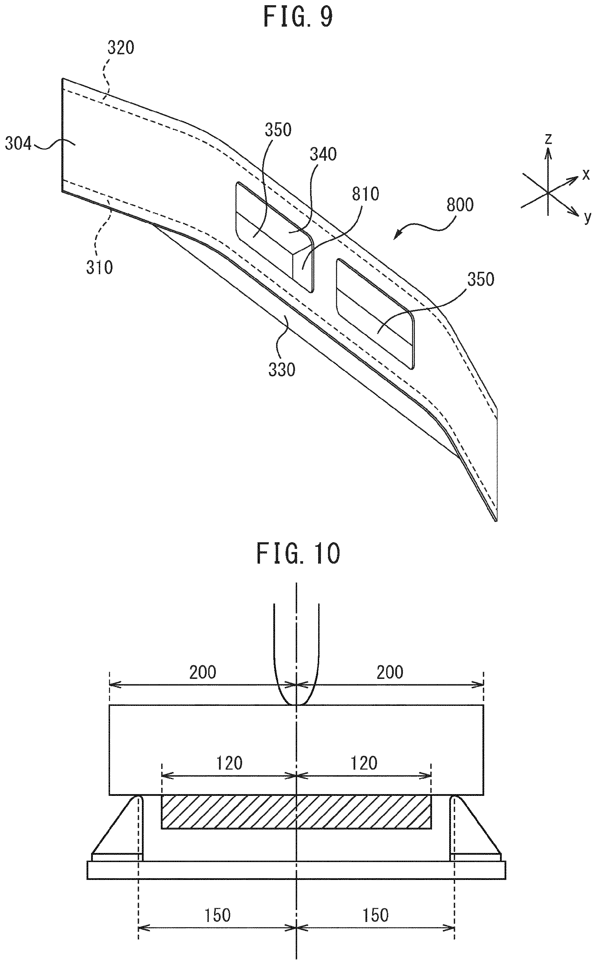

As shown in FIG. 9, the lower second joining part 310 is a belt-shaped region arranged at the bottom side of the resin body 304, extending from one end to the other end of the vehicle width direction, and having a predetermined width. The upper second joining part 320 is a belt-shaped region arranged at the top side of the resin body 304, extending from one end to the other end of the vehicle width direction, and having a predetermined width. The lower second joining part 310 and the upper second joining part 320 are made integral through the resin body 304. The lower second joining part 310 and the upper second joining part 320 are joined at the surface at the body part side in a state respectively contacting the lower first joining part 210 and the upper first joining part 220.

The resin reinforcement part 800 has a lower reinforcement rib 330 and upper reinforcement rib 340 which stick out to the vehicle body side and extend along the vehicle width direction (FIG. 8). Below, when not differentiating the lower reinforcement rib 330 and the upper reinforcement rib 340, they will simply be referred to as the "reinforcement ribs". The reinforcement ribs are plate shapes having the vehicle width direction as the long direction, the vehicle front-rear direction as the short direction, and the vehicle top-bottom direction as the thickness direction. The lengths of the reinforcement ribs in the long direction are longer than the distance of the bent part of the resin body 304. The front end of the short direction has a shape along the vehicle body side surface of the resin body 304. The reinforcement ribs are integrally connected to the vehicle body side surface of the resin body 304 at the front end in the short direction. The rear end of the reinforcement rib in the short direction is a substantially parallel linear shape in the vehicle width direction.

Further, the resin reinforcement part 800 has at least one second reinforcement rib 810 sticking out to the vehicle body side and extending in the vehicle top-bottom direction, in the case of FIG. 8, has one. The second reinforcement rib 810 is a plate shape having substantially parallel surfaces in the vehicle front-rear direction and the vehicle top-bottom direction. The second reinforcement rib 810 is preferably arranged at the center of the resin body 304 in the vehicle width direction. The second reinforcement rib 810 is integrally connected with the vehicle body side surface of the resin body 304 at the front end. The top and bottom ends of the second reinforcement rib 810 in the vehicle top-bottom direction are integrally joined respectively with the upper second joining part 320 and lower second joining part 310.

The bumper reinforcement 700 according to this embodiment has a resin reinforcement part 800 provided with a resin body 304, lower second joining part 310, upper second joining part 320, lower reinforcement rib 330, and upper reinforcement rib 340, whereby it can obtain an effect similar to the above embodiment. Further, the resin reinforcement part 800 of this embodiment has the second reinforcement rib 810, so the stress of the resin body 304 countering the outward force F in the vehicle top-bottom direction is larger. Therefore, the resin reinforcement part 800 more reliably keeps the lower first joining part 210 and the upper first joining part 220 of the body part 200 from deforming in directions separating in the vehicle top-bottom direction.

<Modification 3: Resin Reinforcement Member for Bumper Reinforcement>

The above-mentioned resin reinforcement part can be separately used as a resin reinforcement member for a bumper reinforcement provided with a body part having at least one first joining part at the vehicle body side. This resin reinforcement member has at least one second joining part extending along the vehicle width direction, is configured to be arranged more to the vehicle body side than the body part, is configured so as to be joined with the first joining part at the second joining part, and has one or more reinforcement ribs sticking out to the vehicle body side and extending along the vehicle width direction. Here, for the configuration of the resin reinforcement member, it is possible to similarly employ the above-mentioned configuration of the resin reinforcement part.

The above-mentioned resin reinforcement part can be manufactured and sold in the state formed integrally with the above-mentioned body part in the bumper reinforcement. On the other hand, the resin reinforcement member can be manufactured and sold alone. For example, it is possible to provide the resin reinforcement members alone to car makers, etc., and join the resin reinforcement members and body parts integrally on manufacturing lines of the manufacturer, etc., to form bumper reinforcements.

<Modification 4: Surface Treatment>

To improve the bonding strength with at least one of the above-mentioned first joining part of the body part and the second joining part of the resin reinforcement part (resin reinforcement member), it is possible to suitably apply surface treatment.

For example, if the body part is formed using a metal or metal alloy (for example aluminum or aluminum alloy), it is preferable to apply the surface treatment shown below to the first joining part. The surface treated part can be deemed part of the body part.

As the surface treatment, for example, washing or degreasing using a solvent, blasting, polishing, etching, and chemical conversion (for example, boehmite treatment and zirconium treatment) may be mentioned. These treatments can be used alone or in combinations of two or more types. Among these as well, at least one type of treatment selected from the group consisting of blasting, polishing, etching, and chemical conversion is preferable. As specific methods of these surface treatments, known methods can be used.

Surface treatment can clean the surface of the body part and form fine asperities for obtaining an anchor effect on the surface of the body part. Such surface treatment can improve the joinability (bondability) of the surface of the body part and the joining layer formed from the adhesive and/or primer. Surface treatment can also contribute to improvement of the joinability of the body part and resin reinforcement part. It is preferable to apply the surface treatment to the first joining part of the body part before applying the adhesive and/or primer to the surface of the first joining part.

(Washing or Degreasing)

As the washing or degreasing, for example, the method of washing or wiping the surface of the body part by an organic solvent (for example, acetone and toluene) may be mentioned. The washing or degreasing is preferably performed before other surface treatment.

(Blasting)

As the blasting, for example, shot blasting and sand blasting may be mentioned.

(Polishing)

As the polishing, for example, buffing using a polishing cloth, roll polishing using polishing paper (sandpaper), and electrolytic polishing may be mentioned.

(Etching)

As etching, chemical etching (for example, the alkali method, phosphoric acid-sulfuric acid method, fluoride method, chromic acid-sulfuric acid, and iron salt method), and electrochemical etching (for example, electrolytic etching method) may be mentioned.

As the etching, the alkali method using a sodium hydroxide aqueous solution or potassium hydroxide aqueous solution is preferable and the caustic soda method using a sodium hydroxide aqueous solution is more preferable.

The alkali method, for example, can be performed by dipping the body part in an aqueous solution of a concentration of 3 to 20 mass% of sodium hydroxide or potassium hydroxide (etching solution) at 20 to 70°C for 1 to 15 minutes. The etching solution may also have a chelation agent, oxidation agent, phosphate, or other additive mixed into it. After dipping, for example, the body part is preferably neutralized (desmutted) by a 5 to 20 mass% nitric acid aqueous solution, rinsed, and dried.

(Chemical Conversion)

The chemical conversion forms a chemical conversion coating as a surface treated part on the surface of the body part.

As the chemical conversion, for example, boehmite treatment and zirconium treatment may be mentioned. Among these as well, boehmite treatment is preferable.

Boehmite treatment treats a body part formed using aluminum or aluminum alloy with hot water to enable formation of a boehmite coating on the surface of the body part. In the hot water, as a reaction accelerator, ammonia or triethanol amine, etc., may also be mixed. Boehmite treatment dipping the body part in 90 to 100°C hot water containing concentration 0.1 to 5.0 mass% triethanol amine for 3 seconds to 5 minutes is preferable.

Zirconium treatment dips a body part in a solution containing zirconium phosphate or another zirconium salt to enable formation of a coating of a zirconium compound on the surface of the body part. It is preferably performed by dipping a body part in a 45 to 70°C solution of a conversion agent for zirconium treatment (for example, "ParCoat™ 3762" and "ParCoat™ 3796" made by Nihon Parkerizing Co., Ltd.) for 0.5 to 3 minutes. The zirconium treatment is preferably performed after etching by the caustic soda method.

<Modification 5: Modification of Joining by Primer>

Joining of the body part and resin reinforcement part while applying a primer to the surface of the body part in the following way is advantageous in that the joining strength of the body part and resin reinforcement part is improved more. Below, to facilitate understanding of the invention, the "primer layer" is described, but this corresponds to the above-mentioned "joining layer".

(Deposited Functional Group Layer)

A deposited functional group layer can be applied to the surface of the body part. This deposited functional group layer is a layer laid between the surface treated part of the body part explained above and the primer layer explained later and contiguous with the two. The deposited functional group layer is a layer having functional groups introduced from at least one type of agent selected from the group consisting of a silane coupling agent, isocyanate compound, and thiol compound.

By the above-mentioned layer having the functional groups being formed between the surface treated part of the body part and the later explained primer layer, the functional groups react with the primer layer to form chemical bonds. As a result, it is possible to better improve the joinability between the surface of the body part and the primer layer. The deposited functional group layer can also contribute to improvement of the joinability of the body part and the resin reinforcement part.

Before forming the primer layer on the body part, it is preferable to apply at least one type of agent selected from the group consisting of a silane coupling agent, isocyanate compound, and thiol compound to the surface treated part of the body part to form a deposited functional group layer on the surface treated part of the body part.

The body part can better improve the joinability at the body part, the primer layer, and the resin reinforcement part by the synergistic effect of the anchor effect due to the fine asperities of the surface treated part and chemical bonding by the deposited functional group layer.

As the method for forming the deposited functional group layer, for example, the spray coating method and dipping method can be used. Specifically, for example, it is possible to do this by the method of dipping the body part in a solution containing a concentration 5 to 50 mass% silane coupling agent at ordinary temperature to 100°C for 1 minute to 5 days, then allowing the body part to dry at ordinary temperature to 100°C for 1 minute to 5 hours.

A. Silane Coupling Agent

As the silane coupling agent, for example, a known material able to be used for surface treatment of glass fiber can be used. The silanol groups produced by hydrolysis of a silane coupling agent or silanol groups oligomerized from the same react with the hydroxy groups on the surface treated part of the body part to bond with the body part. On the other hand, functional groups derived from silane coupling agents able to chemically bond with the primer layer can be imparted to the body part.

The silane coupling agent is not particularly limited. As examples, vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropylmethyltrimethoxysilane, 3-glycidoxypropylmethyldiethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysi-

14

lane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminopropyltrimethoxysilane hydrochlorides, tris-(trimethoxysilylpropyl)isocyanurate, 3-ureidopropyltrialkoxysilanes, 3-mercaptopropylmethyldimethoxysilane, 3-isocyanatopropyltriethoxysilane, and dithioltriazinepropyltriethoxysilane may be mentioned. The silane coupling agents can be used alone or in combinations of two or more types.

B. Isocyanate Compound

An isocyanate compound bonds with the body part by the isocyanato groups in the isocyanate compound reacting with the hydroxy groups on the surface treated part of the body part. On the other hand, functional groups derived from isocyanate compounds able to chemically bond with the primer layer can be imparted to the body part.

The isocyanate compound is not particularly limited. As an example, polyfunctional isocyanate can be mentioned. Specifically, diphenylmethane diisocyanate (MDI), hexamethylene diisocyanate (HDI), tolylene diisocyanate (TDI), and isophorone diisocyanate (IPDI) can be mentioned. In addition, isocyanate compounds having radical reactive groups can be mentioned. Specifically, 2-isocyanatoethyl methacrylate (for example, "Karenz™ MOI" made by Showa Denko K.K.), 2-isocyanatoethyl acrylate (for example, "Karenz™ AOI" and "AOI-VM" made by Showa Denko K.K.), 1,1-(bisacryloyloxyethyl)ethyl isocyanate (for example, "Karenz™ BEI" made by Showa Denko K.K.) can be mentioned.

C. Thiol Compound

A thiol compound bonds with the body part by the mercapto groups (thiol groups) in the thiol compound reacting with the hydroxy groups on the surface treated part of the body part. On the other hand, functional groups derived from thiol compounds able to chemically bond with the primer layer can be imparted to the body part.

The thiol compound is not particularly limited. As examples, pentaerythritol tetrakis(3-mercaptopropionate) (for example, "QX40" made by Mitsubishi Chemical Corporation and "QE-340M" made by Toray Fine Chemicals Co., Ltd.), ether-based primary thiols (for example, "Capcure™ 3-800" made by Cognis), 1,4-bis(3-mercaptobutyryloxy)butane (for example, "Karenz™ MT BD1" made by Showa Denko K.K.), pentaerythritol tetrakis(3-mcrcaptobutylate) (for example, "Karenz™ MT PE1" made by Showa Denko K.K.), 1,3,5-tris(3-mercaptobutyloxyethyl)-1,3,5-triazine-2,4,6(1H,3H,5H)-trione (for example, "Karenz™ MT NR1" made by Showa Denko K.K.) can be mentioned.

(Primer Layer)

The primer layer may also be applied to the surface treated part of the body part. From the viewpoint of the joinability, it is preferable to apply the primer layer to the above-mentioned deposited functional group layer.

The primer layer may be configured by a single layer or may be configured from two or more layers. All layers of a primer layer configured by a plurality of layers may be thermoplastic resin layers or may be curable resin layers. A primer layer configured by a plurality of layers may also be configured by one or more thermoplastic resin layers and one or more curable resin layers.

The primer layer formed using the later explained materials can exhibit excellent joinability (bondability) with respect to the surface treated part of the body part. In addition to this, this primer layer differs from a general primer layer and can protect the surface of the body part and reduce or suppress deposition of dirt on the body part or degradation (for example, oxidation) of the same.

This primer layer can better improve the joinability of the body part and resin reinforcement part. By applying such a primer layer, it is possible to provide a body part able to maintain a state giving excellent joinability over a long period of several months in a state where the surface of the body part is protected.

D. Thermoplastic Phenoxy Resin

At least one layer of the primer layer is preferably a layer formed from a resin composition including a thermoplastic phenoxy resin (below, referred to as a "thermoplastic phenoxy resin layer").

The thermoplastic phenoxy resin can be formed with a thermoplastic structure, that is, a linear polymer structure, by a polyaddition reaction of a bifunctional epoxy resin and bifunctional phenol compound in the presence of a catalyst. That is, unlike a thermosetting resin forming a three-dimensional network by a cross-linked structure, it is possible to form a primer layer having thermoplasticity.

The thermoplastic phenoxy resin layer may be formed by a polyaddition reaction of a bifunctional epoxy resin and bifunctional phenol compound on the surface of the body part or may be formed by coating the body part after a polyaddition reaction. From the viewpoint of improvement of the joining strength between the body part and the primer layer, the thermoplastic phenoxy resin layer is preferably formed by a polyaddition reaction of the bifunctional epoxy resin and bifunctional phenol compound on the surface of the body part. For example, the thermoplastic phenoxy resin layer can be formed by coating the body part with a resin composition including a bifunctional epoxy resin and bifunctional phenol compound, evaporating the solvent as necessary, and heating to cause a polyaddition reaction.

The polyaddition reaction is preferably performed on the surface of the deposited functional group layer. The primer layer including the thermoplastic phenoxy resin layer formed in this way is excellent in joinability with the body part and is also excellent in joinability with the resin reinforcement part.

As the method for forming the primer layer, for example, the spray coating method and dipping method or other coating method may be mentioned.

As the bifunctional epoxy resin, for example, a bisphenol type epoxy resin and biphenyl type epoxy resin may be mentioned. The bifunctional epoxy resin can be used alone or in combinations of two or more types. As examples, specifically, "jER™ 828", "jER™ 834", "jER™ 1001", "jER™ 1004", and "jER™ YX-4000" made by Mitsubishi Chemical Corporation may be mentioned.

As the bifunctional phenol compound, for example, bisphenol and biphenol may be mentioned. The bifunctional phenol compound can be used alone or in combinations of two or more types.

As the catalyst for a polyaddition reaction of an in-situ polymerizable phenoxy resin, for example, triethylamine, 2,4,6-tris(dimethylaminomethyl)phenol, or other tertiary amines and triphenylphosphine or other phosphorus compounds may be mentioned.

A polyaddition reaction can be performed in accordance with the type of the reaction compound, etc. For example, the polyaddition reaction is preferably performed by heating at 120 to 200°C for 5 to 90 minutes.

E. Curable Resin

If the primer layer is composed of a plurality of layers, at least one layer among these is preferably a layer formed from a resin composition including a curable resin (below, referred to the "curable resin layer"). As the curable resin, for example, a urethane resin, epoxy resin, vinyl ester resin, and unsaturated polyester resin may be mentioned.

Each layer of the curable resin layer may be formed by a single type of resin alone or by two or more types of resins mixed together. Alternatively, each layer of the two or more layers may be composed of a different type of curable resin layer.

By the primer layer being a multilayer configuration of an in-situ polymerization type phenoxy resin layer and a curable resin layer, it is possible to provide a body part provided with a primer layer having properties based on the curable resin (for example, strength and impact resistance).

The stacking order of the curable resin layer and in-situ polymerization type phenoxy resin layer is preferably, for example, from the viewpoint of obtaining excellent joinability with the resin reinforcement part, one where the in-situ polymerization type phenoxy resin layer becomes the outermost surface of the primer layer.

As the method for forming the curable resin layer, for example, the spray coating method, dipping method, or other coating method may be mentioned.

The curable resin composition may also contain, as optional components, a solvent and various additives (for example, coloring agent). In this case, it is preferable that the curable resin be the main component in the components contained other than the solvent of the resin composition (solid content). The "main component" means a content of the curable resin of 50 to 100 mass%. The content is preferably 60 mass% or more, more preferably 80 mass% or more.

In the present disclosure, the "curable resin" means a resin which cures by cross-linking and encompasses a heat curing type, ordinary temperature curing type, and photocuring type. Heat curing type, ordinary temperature curing type, and photocuring type curable resins can be used alone or in combinations of two or more types. Photocuring type curable resins can, for example, be cured by being irradiated by visible light or ultraviolet light. As photocuring type curable resins, for example, "Ripoxy™ LC-760" and "Ripoxy™ LC-720" made by Showa Denko K.K. and other vinyl ester resins may be mentioned.

a. Urethane Resin

A urethane resin is a resin obtained by reaction between isocyanato groups and hydroxy groups. A urethane resin corresponding to one defined in the ASTM D16 as a "paint containing a polyisocyanate with a vehicle nonvolatile component of 10 mass% or more" is preferable. The urethane resin may be a one-part type or a two-part type.

As a one-part type urethane resin, for example, an oil modified type urethane resin (urethane resin curing by oxidation polymerization of unsaturated fatty acid groups), moisture curable type urethane resin (urethane resin curing by reaction of isocyanato groups and water in the air), block type urethane resin (urethane resin curing by reaction of isocyanato groups, which are produced by dissociation of block agents by heating, and hydroxy groups), and lacquer type urethane resin (urethane resin curing by drying by evaporation of solvent) may be mentioned. Among these as well, from the viewpoint of ease of handling, a moisture curable type one-part urethane resin is preferably used. Specifically, for example, "UM-50P" made by Showa Denko K.K. may be mentioned.

As a two-part type urethane resin, for example, a catalyst curable type urethane resin (urethane resin curing by reaction of isocyanato groups and water in the air, etc., in the presence of a catalyst) and a polyol curing type urethane resin (urethane resin cured by reaction of isocyanato groups and hydroxy groups of a polyol compound) may be mentioned.

As the polyol compound in a polyol curing type urethane resin, for example, polyester polyol, polyether polyol, and a phenol resin may be mentioned.

As the isocyanate compound having isocyanato groups in the polyol curing type urethane resin, for example, hexamethylene diisocyanate (HDI), tetramethylene diisocyanate, dimer acid diisocyanate, or other aliphatic isocyanates; 2,4- or 2,6-tolylene diisocyanate (TDI) or their mixtures, p-phenylene diisocyanate, xylylene diisocyanate, and diphenylmethane diisocyanate (MDI) or its polynuclear mixture, that is, polymeric MDI, or other aromatic isocyanates; and also isophorone diisocyanate (IPDI) or other alicyclic isocyanates may be mentioned.

The ratio of mixture of the polyol compound and isocyanate compound in the polyol curing two-part type urethane resin is preferably a molar equivalent ratio of hydroxy/isocyanato groups of 0.7 to 1.5 in range.

As the urethane forming catalyst used in the two-part type urethane resin, for example, triethylenediamine, tetramethylguanidine, N,N,N',N'-tetramethylhexane-1,6-diamine, dimethyletheramine, N,N,N',N",N"-pentamethyldipropylene-triamine, N-methylmorpholine, bis(2-dimethylaminoethyl)ether, dimethylaminoethoxyethanol, and triethylamine or other amine-based catalysts; dibutyl tin diacetate, dibutyl tin dilaurate, dibutyl tin thiocarboxylate, and dibutyl tin dimaleate or other organotin catalysts may be mentioned.

In the polyol curing type urethane resin, in general, it is preferable that 0.01 to 10 parts by mass of a urethane forming catalyst be mixed into 100 parts by mass of a polyol compound.

b. Epoxy Resin

An epoxy resin is a resin having at least two epoxy groups in each molecule.

As the prepolymer before curing of the epoxy resin, for example, an ether-based bisphenol type epoxy resin, novolac type epoxy resin, polyphenol type epoxy resin, aliphatic type epoxy resin, ester-based aromatic epoxy resin, cyclic aliphatic epoxy resin, and also ether- and an ester-based epoxy resin may be mentioned. Among these as well, a bisphenol A type epoxy resin is suitably used. These may be used as single types alone or as two types or more combined.

As a bisphenol A type epoxy resin, specifically, for example, "jER™ 828" and "jER™ 1001" made by Mitsubishi Chemical Corporation may be mentioned.

As a novolac type epoxy resin, specifically, for example, "D.E.N.™ 438" made by Dow Chemical Company may be mentioned.

As the curing agent used for the epoxy resin, for example, an aliphatic amine, aromatic amine, acid anhydride, phenol resin, thiols, imidazoles, and cationic catalyst or other known curing agent may be mentioned. As the curing agent, at least one type can be selected from long chain aliphatic amines and thiols so as to improve the elongation and impact resistance of the primer layer.

As specific examples of the thiols, compounds the same as those illustrated as thiol compounds in the abovementioned surface treatment may be mentioned. Among these as well, from the viewpoint of the elongation and impact resistance, pentaerythritol tetrakis(3-mercaptobutyrate) (for example, "Karenz™ MT PE1" made by Showa Denko K.K.) is preferable.

c. Vinyl Ester Resin

A vinyl ester resin is composed of a vinyl ester compound dissolved in a polymerizable monomer (for example, styrene, etc.) and is also called an epoxy(meth)acrylate resin. The vinyl ester resin in the present disclosure includes urethane (meth)acrylate resins as well.

As the vinyl ester resin, for example, one described in "Polyester Resin Handbook" (Nikkan Kogyoshimbunsha, issued 1988) and "Toryo Yogo Jiten" (Japan Society of Colour Material, issued 1993) can be used. As examples, specifically, "Ripoxy™ R-802", "Ripoxy™ R-804", and "Ripoxy™ R-806" made by Showa Denko K.K. may be mentioned.

As the urethane (meth)acrylate resin, for example, a radical polymerizable unsaturated group-containing oligomer obtained by causing a reaction between an isocyanate compound and polyol compound, then causing a reaction of a hydroxy group-containing (meth)acrylic monomer (and if necessary, a hydroxy group-containing allyl ether monomer) may be mentioned. As an example, specifically, "Ripoxy™ R-6545" made by Showa Denko K.K. may be mentioned.

The vinyl ester resin can be made to cure by radical polymerization by heating in the presence of an organic peroxide or other catalyst.

As the organic peroxide, for example, ketone peroxides, peroxyketals, hydroperoxides, diallyl peroxides, diacyl peroxides, peroxyesters, and peroxydicarbonates may be mentioned. These, for example, can be cured at ordinary temperature by combination with a cobalt metal salt.

As the cobalt metal salt, for example, cobalt naphthenate, cobalt octylate, and cobalt hydroxide may be mentioned. Among these as well, cobalt naphthenate and/or cobalt octylate is preferable.

d. Unsaturated Polyester Resin

The unsaturated polyester resin comprises a condensate obtained by an esterification reaction between a polyol compound and unsaturated polybasic acid (and if necessary, a saturated polybasic acid) (unsaturated polyester) dissolved in a polymerizable monomer (for example, styrene).

As the unsaturated polyester resin, for example, one described in "Polyester Resin Handbook" (Nikkan Kogyoshimbunsha, issued 1988) and "Toryo Yogo Jiten" (Japan Society of Colour Material, issued 1993) can be used. As an example, specifically, "Rigolac™" made by Showa Denko K.K., etc., may be mentioned.

The unsaturated polyester resin, like the vinyl ester resin, can be made to cure by radical polymerization due to heating in the presence of a catalyst.

(Joining Method Using Primer)

In the step of joining the second joining part of the resin reinforcement part with the first joining part of the body part of the method of production of the bumper reinforcement explained above, it is preferable to employ the above-mentioned primer. As such a joining step, for example, the method of applying the above-mentioned primer layer to the first joining part of the body part, applying the second joining part of the resin reinforcement part to the primer layer, then heating the primer layer and the second joining part to melt fuse can be mentioned. If the resin reinforcement part includes a thermoplastic resin, the heat when heating the body part and resin reinforcement part to melt fuse can cause the formation of a resin diffused layer of a mixture of the thermoplastic resin constituents of the two at the interface of the primer layer and the resin reinforcement part. As a result, the joining strength of the primer layer and the resin reinforcement part becomes improved much more, so it is possible to improve the joining strength of the bumper reinforcement as a whole.

As the method of heating and melting, for example, ultrasonic welding, vibration welding, heat welding, hot air welding, induction welding, and injection welding can be mentioned.

EXAMPLES

Examples and comparative examples relating to the present invention are shown below. However, the present invention is not limit to the following examples.

< <Example 1>>

<Body Member (Body Part)>

An aluminum alloy A6061 alloy billet was hot extruded to produce an extruded shape material of a W-hat type open cross-sectional shape shown in FIG. 5. This was water quenched right after being extruded and artificially aged (200°C × 6 hours), then was cut into a 400 mm length to prepare a body member for forming the body part. Here, as shown in FIG. 5, the widths a1 and a2 of the first joining part were 26.3 mm, the height b1 of the top surface and the height b2 of the bottom surface were 18 mm, the height "c" of the front surface part was 105 mm, the depth d1 of the top part and the depth d2 of the bottom part were 57.5 mm, the depth e1 from the top surface to the center recessed part and the depth e2 from the bottom surface to the center recessed part were 15 mm, and the thickness t1 was 2.5 mm.

<Resin Reinforcement Member (Resin Reinforcement Part)>

PA66-GF30 (polyamide 66 containing glass fiber in 30 mass%) was injected molded to shape it and prepare a resin reinforcement member for forming a resin reinforcement part of a length of 240 mm having the cross-section shown in FIG. 5. Here, as shown in FIG. 5, the amounts of projection f1 and f2 of the reinforcement ribs were 50 mm, the distance "g" between the two reinforcement ribs was 105 mm, the width of the second joining part was 26.3 mm the same as the widths a1 and a2 of the first joining part, and the thickness t2 was 2.5 mm.

For joining the body member and the resin reinforcement member, the primer joining shown below was applied.

<Surface Treatment Step>

The body member formed using the above aluminum alloy was dipped for 1.5 minutes in a concentration 5 mass% sodium hydroxide aqueous solution, then was neutralized with a concentration 5 mass% nitric acid aqueous solution, rinsed, and dried as etching treatment.

Next, the body member after the etching treatment was boiled for 3 minutes in an aqueous solution containing triethanolamine in 0.3 mass% as boehmite treatment to thereby form a surface treated part on the surface of the body member (boehmite coating having surface asperities).

<Deposited Functional Group Layer Forming Step>

Next, the boehmite treated body member was dipped into an 80°C silane coupling agent-containing solution obtained by dissolving 2.48 g (0.01 mole) of 3-methacryloxypropyltrimethoxysilane ("KBM-503" made by Shin-Etsu Silicone Co., Ltd.; silane coupling agent) in 1000 g of industrial use ethanol for 3 minutes. After that, the body member was taken out and allowed to dry whereby a deposited functional group layer was formed on the surface of the boehmite coating (surface treated part).

< Primer Layer Forming Step>

Next, a one-part type urethane resin ("UM-50P" made by Showa Denko K.K.) was coated on the surface of the deposited functional group layer of the first joining part of the body member by spraying so that the thickness after drying became 15 $\mu$m. Further, this was allowed to stand at ordinary temperature in the air for 24 hours to evaporate the solvent and cure the urethane resin to form a first layer of the primer layer (thermosetting resin layer).

100 g of an epoxy resin ("jER™1004" made by Mitsubishi Chemical Corporation), 12.6 g of bisphenol A, and 0.45 g of triethylamine were dissolved in 209 g of acetone to prepare an in-situ polymerization type phenoxy resin composition. This was coated on the surface of the thermosetting resin layer by the spray method so that the thickness after drying became 10 $\mu$m. Further, this was allowed to stand at ordinary temperature in the air for 30 minutes to make the solvent evaporate, then was allowed to stand in a 150°C oven for 30 minutes to cause a polyaddition reaction, then was allowed to cool down to ordinary temperature whereby a second layer of the primer layer (in-situ type phenoxy resin layer) was formed.

The above method was used to prepare a straight shaped body member composed of a body member with a deposited functional group layer on the surface of which a primer layer composed of two layers of a thickness 15 $\mu$m thermosetting resin layer and a thickness 10 $\mu$m in-situ polymerization type phenoxy resin layer is formed.

<Joining Step>

Next, the body member and the resin reinforcement member were arranged inside a seal forming mold containing a heater at a position where the first joining part and second joining part, which are joining surfaces, are made to abut. The body member was heated up to 150°C, the seal forming mold was closed so that a pressure of 0.2 MPa was applied to the joining surfaces, and the parts were joined by holding them in the pressured state for 30 seconds. Due to this, a test sample of a bumper reinforcement provided with a body member and resin reinforcement member was prepared.

<< Example 2>>

<Body Member (Body Part)>

An aluminum alloy A6061 alloy billet was hot extruded to produce an extruded shape material of a closed cross-sectional shape of two substantially square shapes joined together similar to the body part of the bumper reinforcement shown in FIG. 7. This was water quenched right after being extruded and artificially aged (200°C × 6 hours), then was cut into a 400 mm length to prepare a straight shaped body member for forming the body part. Here, as shown in FIG. 7, the height i1 was 100 mm, the depth i2 was 60 mm, and the thickness t3 was 2.0 mm.

<Resin Reinforcement Member (Resin Reinforcement Part)>

PA66-GF30 (polyamide 66 containing glass fiber in 30 mass%) was injected molded to shape it and prepare a resin reinforcement member for forming a resin reinforcement part of a length of 240 mm having the cross-section shown in FIG. 7. Here, the width k1 of the second joining part shown in FIG. 7 was 100 mm, the amount of projection k2 of the reinforcement rib was 50 mm, and the thickness t4 was 2.0 mm.

The body member and resin reinforcement member were joined in the same way as Example 1 to prepare a test sample of a bumper reinforcement provided with a body member and resin reinforcement member.

< <Example 3>>

As the body member and resin reinforcement member, ones the same as in Example 1 were used. The body member and the resin reinforcement member were joined using the epoxy adhesive E250 (Konishi Co., Ltd.)

The joining surfaces of the body member and the resin reinforcement member, that is, the first joining part and second joining part, were coated over their entireties with the epoxy adhesive E250 so that the thicknesses became 50 to 100 $\mu$m in range. Next, the body member and the resin reinforcement member were placed against each other, then clips were used to fasten them. The assembly was heated in a 100°C oven for 1 hour to bond it. Due to this, a test sample of a bumper reinforcement provided with a body member and resin reinforcement member was fabricated.

<<Example 4>>

As the body member and resin reinforcement member, ones the same as in Example 1 were used. The body member and the resin reinforcement member were joined using a combination of the urethane adhesive KU521 and the KU curing agent No. 5 (both Konishi Co., Ltd.)

The joining surfaces of the body member and resin reinforcement member, that is, the first joining parts and second joining parts, were coated over their entireties by a mixture of the urethane adhesive KU521 into which the KU curing agent No. 5 was added so that the thickness became 200 to 500 $\mu$m in range. Next, the body member and the resin reinforcement member were placed against each other, then clips were used to fasten them. The assembly was heated in a 100°C oven for 1 hour to bond it. Due to this, a test sample of a bumper reinforcement provided with a body member and resin reinforcement member was fabricated.

<< Example 5>>

As the body member and resin reinforcement member, ones the same as in Example 1 were used. The body member and the resin reinforcement member were joined by heat crimping.

The upper first joining part and the lower first joining part of the body member were respectively provided with $\phi$2 mm through holes in lines at equal intervals in 20 locations. The upper second joining part and lower second joining part of the resin reinforcement member were respectively provided with $\phi$2 mm, height 1.5 mm columnar shape projecting parts at positions corresponding to these through holes. The projecting parts provided at the resin reinforcement member were fit into the through holes then the body member and resin reinforcement member were sandwiched between a hot plate heated to 250°C and a fixture receiving the upper second joining part and lower second joining part of the resin reinforcement member to thereby make the parts of the projecting parts provided at the resin reinforcement member sticking out from the through holes of the body member melt and fasten the body member and resin reinforcement member by heat crimping. Due to this, a test sample of a bumper reinforcement provided with a body member and resin reinforcement member was prepared.

< <Comparative Example 1 > >

Except for changing the thickness t3 to 2.7 mm, the same procedure was followed as in Example 2 to prepare the body member. This body member was used as the test sample of Comparative Example 1.

< <Comparative Example 2> >

Except for changing the thickness t3 to 2.8 mm, the same procedure was followed as in Example 2 to prepare the body member. This body member was used as the test sample of Comparative Example 2.

<<Comparative Example 3>>

Except for changing the thickness t3 to 3.3 mm, the same procedure was followed as in Example 2 to prepare the body member. This body member was used as the test sample of Comparative Example 3.

<<Comparative Example 4>>

The body member of Example 1 was used as the test sample of Comparative Example 4.

< <Evaluation> >

The test samples were evaluated as follows: The results are summarized in Table 1.

<Evaluation of Plastic Deformation: Three-Point Bending and Compression Test>

A test was conducted using the three-point bending and compression test machine of the configuration shown in FIG. 10. Specifically, a test sample was arranged on a test machine so that an indenter positioned above was positioned at the center of the test sample, then a load of 5t or more was applied through the indenter to the test sample in a 25°C atmosphere by a displacement speed of 1 mm/min. Based on the obtained data, a graph was prepared of the load-displacement curve plotting the displacement (mm) on the x-axis and the load (t) on the y-axis. From this graph, the slant of the initial line region (between 1t and 2t) was found, a parallel line based on this slant was shifted to the right side, and the amount of displacement (amount of residual displacement) was found from the intersection of the x-axis and parallel line when the load-displacement curve and parallel line crossed at the time of a 5t load. Next, the amount of residual strain (%) was calculated from this amount of displacement based on the following formula 1. Here, an amount of residual strain of 0.20% or more and less than 0.50% can be evaluated as "good" and one of 0.50% or more as "poor":

$$\text{Amount of residual strain (\%)} = (6 \times \text{thickness of test sample} \times \text{amount of displacement}) / (\text{distance between support points})^2 \ldots \text{formula 1}$$

In the formula 1, the distance between support points is 300 mm.

<Evaluation of Reduced Weight>

As an indicator of reduced weight, the mass per unit length (g/m) was found for each test sample. The density of the aluminum alloy (A6061 alloy) forming the body member was 2.70 g/cm$^3$, while the density of the PA66-GF30 forming the resin reinforcement member was 1.37 g/cm$^3$. A mass per unit length of less than 2700 g/m was evaluated as "good" while one of 2700 g/m or more was evaluated as "poor".

[Table 1] Table 1

| | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|
| Type of body member | W-hat shape | Closed cross-section | W-hat shape | W-hat shape | W-hat shape | Closed cross-section | Closed cross-section | Closed cross-section | W-hat shape |
| Thickness of body member (mm) | 2.5 | 2.0 | 2.5 | 2.5 | 2.5 | 2.7 | 2.8 | 3.3 | 2.5 |
| Thickness of resin reinforcement member (mm) | 2.5 | 2.0 | 2.5 | 2.5 | 2.5 | - | - | - | - |
| Joining method | Primer joining | Primer joining | Epoxy adhesive | Urethane adhesive | Heat crimping | - | - | - | - |
| Weight per unit length (g/m) | 2628 (good) | 2641 (good) | 2636 (good) | 2676 (good) | 2635 (good) | 2652 (good) | 2746 (poor) | 3209 (poor) | 1790 (good) |
| Residual strain (%) | 0.39 (good) | 0.41 (good) | 0.39 (good) | 0.41 (good) | 0.48 (good) | 0.50 (poor) | 0.49 (good) | 0.42 (good) | 0.56 (poor) |

< <Results> >

As will be understood from Table 1, the constitutions of Example 1 and Example 2 provided with body members and resin reinforcement members were confirmed to be reduced in weight while excellent in balance of rigidity and plastic deformation.

In Example 3 using an epoxy adhesive as the joining means instead of primer joining, a constitution was obtained having substantially equal performance as Example 1. In Example 4 using a urethane adhesive as the joining method, the weight per unit length was greater compared with Example 1 and the residual strain was also somewhat large, but they were still in the range of practical application. A general urethane adhesive is designed to be applied thickly so as to make up for the low surface accuracy of the joined part and has relatively high elasticity as a property of the material. The fact that the urethane adhesive used has these properties is believed to work disadvantageously with respect to the weight per unit length and the residual strain. In Example 5 using heat crimping as the joining method, the weight per unit length was equal to that of Example 1. The body member and the resin reinforcement member were locally joined, so the residual strain was large, but it was still in the range of practical application.

According to the present invention, it is possible to produce a bumper reinforcement composed of a body member and a resin reinforcement member joined sturdily and featuring light weight, yet an excellent balance of rigidity and plastic deformation.

INDUSTRIAL APPLICABILITY

The present invention can be utilized for a bumper reinforcement forming a framework of a bumper structure of an automobile and for a method of production of the same.

REFERENCE SIGNS LIST

    10: bumper fascia
    20: energy absorber
    30: bumper reinforcement
    40: crush box
    50: vehicle body fastening member
    100: bumper structure
    200: body part
    202: bent part
    210: lower first joining part
    220: upper first joining part
    230: bottom part
    240: top part
    250: front surface part
    252: center recessed part
    254: bottom surface
    256: top surface
    260: cavity part
    270: elongated hole
    272: positioning hole
    300: resin reinforcement part
    302: bent part
    304: resin body
    310: lower second joining part
    320: upper second joining part
    330: lower reinforcement rib
    340: upper reinforcement rib
    350: weight reducing hole
    400: bumper reinforcement
    500: body part
    510: first joining part
    520: center part

530: bottom part
540: top part
550: front surface part
560: cavity part
600: resin reinforcement part
602: resin body
610: second joining part
620: reinforcement rib
700: bumper reinforcement
800: resin reinforcement part
810: second reinforcement rib
a1: width of upper first joining part a2: width of lower first joining part
b1: height of top surface
b2: height of bottom surface
c: height of front surface part
d1: depth of top part
d2: depth of bottom part
e1: depth from top surface to center recessed part
e2: depth from bottom surface to center recessed part
f1: amount of projection of upper reinforcement rib
f2: amount of projection of lower reinforcement rib
g: gap between upper reinforcement rib and lower reinforcement rib
h1: width of upper second joining part
h2: width of lower second joining part
i1: height of front surface part
i2: depth of body part
i3: height of cavity
j: width of first joining part
k1: width of second joining part
k2: amount of projection of reinforcement rib
t1: thickness of body part
t2: thickness of resin reinforcement part
t3: thickness of body part
t4: thickness of resin reinforcement part
$\alpha 1$: angle formed by top part and upper first joining part
a2: angle formed by bottom part and lower first joining part
$\beta 1$: angle formed by top surface and top part
$\beta 2$: angle formed by bottom surface and bottom part
$\gamma 1$: angle formed by upper second joining part and upper reinforcement rib
$\gamma 2$: angle formed by lower second joining part and lower reinforcement rib

## Claims

1.  A bumper reinforcement comprising

    a body part extending along a vehicle width direction and
    a resin reinforcement part extending along the vehicle width direction and arranged more at a vehicle body side than the body part
    wherein,
    the body part has at least one first joining part at the vehicle body side, and
    the resin reinforcement part has
    at least one second joining part to be joined with the first joining part and
    one or more reinforcement ribs sticking out to the vehicle body side and extending along the vehicle width direction.

2.  The bumper reinforcement according to claim 1, wherein

the body part has an open cross-section and
the first joining part of the body part and the second joining part of the resin reinforcement part are joined so that a cavity part is formed inside of the body part.

3. The bumper reinforcement according to claim 1 or 2, wherein the cross-sectional shape of the body part is a hat type in form.

4. The bumper reinforcement according to any one of claims 1 to 3, wherein

the body part has the first joining parts at the top and bottom, and
the reinforcement ribs are arranged corresponding to the first joining parts.

5. The bumper reinforcement according to any one of claims 1 to 4, wherein the resin reinforcement part has one or more holes.

6. The bumper reinforcement according to any one of claims 1 to 5, wherein the body part includes an aluminum alloy exhibiting a 350 MPa or more tensile strength.

7. The bumper reinforcement according to any one of claims 1 to 6, wherein the resin reinforcement part includes a resin exhibiting a 5 GPa or more elasticity at 80°C.

8. The bumper reinforcement according to any one of claims 1 to 7, wherein at least one type of agent selected from the group consisting of an adhesive and a primer is arranged between the first joining part and the second joining part.

9. The bumper reinforcement according to any one of claims 1 to 8, wherein

the body part has the first joining parts respectively at the top and bottom,
the resin reinforcement part has
a resin body extending along the vehicle width direction and
the second joining parts respectively at the top and bottom of the resin body, and
the first joining parts and the second joining parts are joined at joining surfaces intersecting with a vehicle front-rear direction.

10. The bumper reinforcement according to any one of claims 1 to 9, wherein the resin body has a second reinforcement rib extending in a vehicle top-bottom direction.

11. A method of production of a bumper reinforcement comprising

a step of preparing a body part having at a vehicle body side at least one first joining part and extending along a vehicle width direction and
a step of making a second joining part of a resin reinforcement part having at least one second joining part and extending along the vehicle width direction join with the first joining part of the body part,
wherein,
the resin reinforcement part is arranged more at the vehicle body side than the body part and
the resin reinforcement part has one or more reinforcement ribs sticking out to the vehicle body side and extending along the vehicle width direction.

12. The method of production according to claim 11, wherein the joining step comprises applying a primer layer to the first joining part of the body part, applying the second joining part of the resin reinforcement part to the primer layer, and then heating and melt bonding the primer layer and the second joining part.

13. A resin reinforcement member for a bumper reinforcement provided with a body part having at least one first joining part at a vehicle body side,

which the resin reinforcement member being arranged more at the vehicle body side than the body part and having
at least one second joining part to be joined with the first joining part and
one or more reinforcement ribs sticking out to the vehicle body side and extending along a vehicle width direction.

**14.** The resin reinforcement member according to claim 13,

which the resin reinforcement member comprises
a resin body extending along the vehicle width direction,
a pair of the second joining parts respectively provided at a top and bottom of the resin body, and
the one or more reinforcement ribs provided at the vehicle body side of the resin body, and
the second joining parts have joining surfaces intersecting with a vehicle front-rear direction.

# FIG. 1

# FIG. 2

# FIG. 3

# FIG. 4

FIG. 5

REFERENCE PLANE

FIG. 6

# FIG. 7

REFERENCE PLANE

# FIG. 8

# FIG. 9

# FIG. 10

FIG. 11

EP 4 242 070 A1

FIG. 12

EP 4 242 070 A1

# FIG. 13

## INTERNATIONAL SEARCH REPORT

International application No.

**PCT/JP2021/040643**

### A. CLASSIFICATION OF SUBJECT MATTER

**B60R 19/03**(2006.01)i; **B60R 19/04**(2006.01)i
FI:  B60R19/04 M; B60R19/03 Z; B60R19/03 B; B60R19/03 C

According to International Patent Classification (IPC) or to both national classification and IPC

### B. FIELDS SEARCHED

Minimum documentation searched (classification system followed by classification symbols)
B60R19/03; B60R19/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-123927 A (TOYODA IRON WORKS CO., LTD.) 24 June 2013 (2013-06-24) paragraphs [0013]-[0029], fig. 1-6 | 1, 3-11, 13-14 |
| A | | 2, 12 |
| Y | JP 2004-203158 A (MAZDA MOTOR CORP.) 22 July 2004 (2004-07-22) paragraphs [0026], [0030], fig. 2 | 1, 3-11, 13-14 |
| A | | 2, 12 |
| A | JP 2017-185929 A (HONDA MOTOR CO., LTD.) 12 October 2017 (2017-10-12) paragraphs [0023]-[0060], fig. 1-6 | 1-14 |

☐ Further documents are listed in the continuation of Box C.       ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **30 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/040643**

| Patent document cited in search report | | | Publication date (day/month/year) | Patent family member(s) | | | Publication date (day/month/year) |
|---|---|---|---|---|---|---|---|
| JP | 2013-123927 | A | 24 June 2013 | US | 2014/0367982 | A1 | |
| | | | | paragraphs [0022]-[0039], fig. 1-6 | | | |
| | | | | WO | 2013/088765 | A1 | |
| | | | | EP | 2792552 | A1 | |
| | | | | CN | 104010886 | A | |
| JP | 2004-203158 | A | 22 July 2004 | US | 2004/0124643 | A1 | |
| | | | | paragraphs [0062]-[0064], fig. 7 | | | |
| | | | | EP | 1433664 | A2 | |
| | | | | CN | 1521059 | A | |
| JP | 2017-185929 | A | 12 October 2017 | CN | 107264451 | A | |

Form PCT/ISA/210 (patent family annex) (January 2015)

**Patent documents cited in the description**

- JP 2020019307 A
- JP 2019209767 A

**Non-patent literature cited in the description**

- **NIKKAN KOGYOSHIMBUNSHA.** Polyester Resin Handbook. 1988
- Toryo Yogo Jiten. Japan Society of Colour Material, 1993
- Japan Society of Colour Materia. Toryo Yogo Jiten. 1993